# EUROPEAN PATENT APPLICATION

(11) **EP 4 841 607 A1**
(43) Date of publication of application: **18.11.2026**
(21) Application number: 26167866.8
(22) Date of filing: 26.03.2026
(51) Int. Cl.: G08G 1/0967, G01C 21/00, G01C 21/36, G08G 1/01, G08G 1/16, H04W 4/46, H04W 12/00

(54) **SYSTEM AND METHOD FOR DYNAMIC ROAD HAZARD COMMUNICATION**

(30) Priority: 15.04.2025 US 202519178973
(71) Applicant: Toyota Jidosha Kabushiki Kaisha, Toyota-shi, Aichi-ken 471-8571 (JP)
(72) Inventor: MCGARY, Caleb, Tokyo, 103-0022 (JP)
(74) Representative: D Young & Co LLP

(57) **Abstract**

Provided are system, method, and device for automatically performing dynamic communication of road hazard. According to example embodiments, the system may include: a memory storage storing computer-executable instructions; and at least one processor communicatively coupled to the memory storage, wherein the at least one processor may be configured to execute the instructions to: receive a hazard broadcast message comprising an identification associated with a road hazard and a rebroadcasting parameter; verify the hazard broadcast message; in response to a successful verification of the hazard broadcast message, rebroadcast the hazard broadcast message based on the rebroadcasting parameter; and display the road hazard on a map based on the identification associated with the road hazard.

## Description

### TECHNICAL FIELD

Example embodiments of the present disclosure relate to a vehicle system, and more specifically, relate to dynamic communication of a road hazard in a vehicle system.

### BACKGROUND

Modern vehicles are capable of performing a wide range of complex functions, such as generating telemetry data, transmitting and receiving data via the internet, and the like.

Among such functions, road hazard communication is one of the most crucial functions in vehicle systems. In particular, the road hazard communication may refer to a function that allows a driver of a vehicle to report road hazards which the driver encounters, such as potholes, fallen trees, sand in the road, and other driving conditions that negatively impact a condition of the road and the safety of driving.

### SUMMARY

Example embodiments consistent with the present disclosure enable reporting of information related to road hazards between vehicles independently without relying on cellular connections to a cellular tower, thereby ensuring that such communication is possible at all-time even during a disaster as long as the message persists.

According to example embodiments, a system is provided. The system may include: a memory storage storing computer-executable instructions; and at least one processor communicatively coupled to the memory storage, wherein the at least one processor may be configured to execute the instructions to: receive a hazard broadcast message comprising an identification associated with a road hazard and a rebroadcasting parameter; verify the hazard broadcast message; in response to a successful verification of the hazard broadcast message, rebroadcast the hazard broadcast message based on the rebroadcasting parameter; and display the road hazard on a map based on the identification associated with the road hazard.

According to example embodiments, the system may include a digital communication module (DCM) installed in a vehicle, and wherein the hazard broadcast message may be received and rebroadcasted by the DCM.

According to example embodiments, the apparatus may be configured to rebroadcast the hazard broadcast message based on the rebroadcasting parameter by: determining whether the rebroadcasting parameter is greater than zero; and in response to determining that the rebroadcasting parameter is greater than zero, decrementing the rebroadcasting parameter by one and rebroadcasting the hazard broadcast message with decremented rebroadcasting parameter.

According to example embodiments, the apparatus may be configured to display the road hazard on the map based on the identification associated with the road hazard by, in response to determining that the road hazard is not already displayed on the map: obtaining information related to the road hazard from a database based on the identification associated with the road hazard; setting a timer associated with the road hazard as a first predefined value; and displaying the road hazard on the map based on the information related to the road hazard and the timer.

According to example embodiments, the apparatus may be configured to display the road hazard on the map based on the identification associated with the road hazard by, in response to determining that the road hazard is already displayed on the map: determining whether a timer associated with the road hazard is less than a second predefined value; in response to determining that the timer associated with the road hazard is less than the second predefined value, resetting the timer associated with the road hazard to the second predefined value; and displaying the road hazard on the map based on information related to the road hazard and the timer.

According to example embodiments, the apparatus may be configured to display the road hazard on the map based on the identification associated with the road hazard by: determining whether a cellular communication to a server is available; in response to determining that the cellular communication to the server is available, transmitting the hazard broadcast message to the server via the cellular communication; receiving updated information related to the road hazard from the server via the cellular communication; displaying an update notification to a user indicating that the updated information related to the road hazard has been received; and displaying the road hazard on the map based on the updated information related to the road hazard.

According to example embodiments, the apparatus may be further configured to: detect a second road hazard; determine an identification associated with the second road hazard and a rebroadcasting parameter; generate a second road hazard message comprising the identification associated with the second road hazard and the rebroadcasting parameter; and broadcast the second road hazard message.

According to example embodiments, a method is provided. The method may include: receiving a hazard broadcast message comprising an identification associated with a road hazard and a rebroadcasting parameter; verifying the hazard broadcast message; in response to a successful verification of the hazard broadcast message, rebroadcasting the hazard broadcast message based on the rebroadcasting parameter; and displaying the road hazard on a map based on the identification associated with the road hazard.

According to example embodiments, the method may be performed by a system comprising a digital communication module (DCM) installed in a vehicle, and wherein the hazard broadcast message may be received and rebroadcasted by the DCM.

According to example embodiments, the rebroadcasting the hazard broadcast message based on the rebroadcasting parameter may include: determining whether the rebroadcasting parameter is greater than zero; and in response to determining that the rebroadcasting parameter is greater than zero, decrementing the rebroadcasting parameter by one and rebroadcasting the hazard broadcast message with decremented rebroadcasting parameter.

According to example embodiments, the displaying the road hazard on the map based on the identification associated with the road hazard may include, in response to determining that the road hazard is not already displayed on the map: obtaining information related to the road hazard from a database based on the identification associated with the road hazard; setting a timer associated with the road hazard as a first predefined value; and displaying the road hazard on the map based on the information related to the road hazard and the timer.

According to example embodiments, the displaying the road hazard on the map based on the identification associated with the road hazard may include, in response to determining that the road hazard is already displayed on the map: determining whether a timer associated with the road hazard is less than a second predefined value; in response to determining that the timer associated with the road hazard is less than the second predefined value, resetting the timer associated with the road hazard to the second predefined value; and displaying the road hazard on the map based on information related to the road hazard and the timer.

According to example embodiments, the displaying the road hazard on the map based on the identification associated with the road hazard may include: determining whether a cellular communication to a server is available; in response to determining that the cellular communication to the server is available, transmitting the hazard broadcast message to the server via the cellular communication; receiving updated information related to the road hazard from the server via the cellular communication; displaying an update notification to a user indicating that the updated information related to the road hazard has been received; and displaying the road hazard on the map based on the updated information related to the road hazard.

According to example embodiments, the method may further include: detecting a second road hazard; determining an identification associated with the second road hazard and a rebroadcasting parameter; generating a second road hazard message comprising the identification associated with the second road hazard and the rebroadcasting parameter; and broadcasting the second road hazard message.

According to example embodiments, a non-transitory computer-readable recording medium is provided. The non-transitory computer-readable recording medium may have recorded thereon instructions executable by at least one processor to cause the at least one processor to perform a method including: receiving a hazard broadcast message comprising an identification associated with a road hazard and a rebroadcasting parameter; verifying the hazard broadcast message; in response to a successful verification of the hazard broadcast message, rebroadcasting the hazard broadcast message based on the rebroadcasting parameter; and displaying the road hazard on a map based on the identification associated with the road hazard.

According to example embodiments, the method may be performed by a system comprising a digital communication module (DCM) installed in a vehicle, and wherein the hazard broadcast message may be received and rebroadcasted by the DCM.

According to example embodiments, the rebroadcasting the hazard broadcast message based on the rebroadcasting parameter may include: determining whether the rebroadcasting parameter is greater than zero; and in response to determining that the rebroadcasting parameter is greater than zero, decrementing the rebroadcasting parameter by one and rebroadcasting the hazard broadcast message with decremented rebroadcasting parameter.

According to example embodiments, the displaying the road hazard on the map based on the identification associated with the road hazard may include, in response to determining that the road hazard is not already displayed on the map: obtaining information related to the road hazard from a database based on the identification associated with the road hazard; setting a timer associated with the road hazard as a first predefined value; and displaying the road hazard on the map based on the information related to the road hazard and the timer.

According to example embodiments, the displaying the road hazard on the map based on the identification associated with the road hazard may include, in response to determining that the road hazard is already displayed on the map: determining whether a timer associated with the road hazard is less than a second predefined value; in response to determining that the timer associated with the road hazard is less than the second predefined value, resetting the timer associated with the road hazard to the second predefined value; and displaying the road hazard on the map based on information related to the road hazard and the timer.

According to example embodiments, the displaying the road hazard on the map based on the identification associated with the road hazard may include: determining whether a cellular communication to a server is available; in response to determining that the cellular communication to the server is available, transmitting the hazard broadcast message to the server via the cellular communication; receiving updated information related to the road hazard from the server via the cellular communication; displaying an update notification to a user indicating that the updated information related to the road hazard has been received; and displaying the road hazard on the map based on the updated information related to the road hazard.

Additional aspects will be set forth in part in the description that follows and, in part, will be apparent from the description, or may be realized by practice of the presented embodiments of the disclosure.

### BRIEF DESCRIPTION OF THE DRAWINGS

Features, aspects, and advantages of embodiments of the disclosure will be described below with reference to the accompanying drawings, in which like reference numerals denote like elements, and wherein:
FIG. 1 illustrates a block diagram of an example system configuration for performing dynamic communication of road hazard, according to one or more example embodiments;
FIG. 2 illustrates a flow diagram of an example method for receiving a road hazard broadcast as part of dynamic communication of road hazard, according to one or more example embodiments;
FIG. 3 illustrates a flow diagram of an example method for rebroadcasting a hazard broadcast message, according to one or more example embodiments;
FIG. 4 illustrates a flow diagram of an example method for displaying a road hazard on a map, according to one or more example embodiments;
FIG. 5 illustrates a flow diagram of an example method for displaying a road hazard on a map, according to one or more example embodiments;
FIG. 6 illustrates a flow diagram of an example method for originating a road hazard broadcast as part of the dynamic communication of road hazard, according to one or more example embodiments; and
FIG. 7 illustrates a block diagram of example components in a system, according to one or more example embodiments.

### DETAILED DESCRIPTION

The following detailed description of exemplary embodiments refers to the accompanying drawings. The foregoing disclosure provides illustration and description but is not intended to be exhaustive or to limit the implementations to the precise form disclosed. Modifications and variations are possible in light of the above disclosure or may be acquired from practice of the implementations. Further, one or more features or components of one embodiment may be incorporated into or combined with another embodiment (or one or more features of another embodiment). Additionally, in the flowcharts and descriptions of operations provided below, it is understood that one or more operations may be omitted, one or more operations may be added, one or more operations may be performed simultaneously (at least in part), and the order of one or more operations may be switched.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Where only one item is intended, the term "one" or similar language is used. Also, as used herein, the terms "has," "have," "having," "include," "including," or the like are intended to be openended terms. Further, the phrase "based on" is intended to mean "based, at least in part, on" unless explicitly stated otherwise. Furthermore, expressions such as "[A] and/or [B]", "at least one of [A] and [B]" or "at least one of [A] or [B]" are to be understood as including only A, only B, or both A and B.

Expressions such as "at least one processor," where configured to implement a plurality of operations, execute a plurality of instructions, etc., are to be understood as a single processor implementing the plurality of operations, etc., or each of plural processors implementing at least some (but not necessarily all) of the plurality of operations, etc.

Reference throughout this specification to "one embodiment," "an embodiment," "non-limiting exemplary embodiment," or similar language means that a particular feature, structure, or characteristic described in connection with the indicated embodiment is included in at least one embodiment of the present solution. Thus, the phrases "in one embodiment", "in an embodiment," "in one non-limiting exemplary embodiment," and similar language throughout this specification may, but do not necessarily, all refer to the same embodiment.

Further, the described features, advantages, and characteristics of the present disclosure may be combined in any suitable manner in one or more example embodiments. One skilled in the relevant art will recognize, in light of the description herein, that the present disclosure can be practiced without one or more of the specific features or advantages of a particular embodiment. In other instances, additional features and advantages may be recognized in certain embodiments that may not be present in all embodiments of the present disclosure.

Furthermore, the term "vehicle" described herein refers to any suitable type of vehicle in which example embodiments of the present disclosure can be implemented. For instance, the "vehicle" may refer to a motorized vehicle such as a car, a truck, a bus, a motorcycle, or any other suitable type of automobile powered by an engine, motor, or other mechanical means. Alternatively or additionally, the "vehicle" described herein may refer to a bicycle, a skateboard, and any other suitable types of non-motorized vehicle, without departing from the scope of the present disclosure.

As described above, the road hazard communication may enable a driver of a vehicle to report road hazards, such as potholes, fallen trees, sand in the road, and other driving conditions that negatively impact the safety of driving.

In the related art, the reporting of road hazards may be performed via a communication from a device at the vehicle (e.g., a mobile cellular device of the driver or a cellular modem installed in the vehicle) to a server via a cellular tower. Once the communication is performed and the road hazard is reported to the server, the server may transmit information related to the road hazard to other vehicles.

For example, a mobile cellular device of the driver may report information regarding a road hazard to a map application (e.g., application, software, and the like that provides map and road information), where the map application may show the location of the road hazard on the map along with other relevant information on other mobile cellular devices that are retrieving the map. In another example, a cellular modem installed in the vehicle may report information regarding a road hazard to a server (e.g., a backend server operated by a vehicle manufacturer), where the server may broadcast information related to the road hazard to other vehicles in the vicinity of the location of the road hazard.

In this regard, the reporting of road hazards in the related art may have the following shortcomings. The reporting of road hazards relies on cellular connections to a cellular tower in order to communicate and report the road hazards to the server. However, the cellular connections may not always be available and the cellular tower may sometimes be congested, especially during a disaster.

Accordingly, there is a need for a method that enables reporting of road hazards without relying on cellular connections to a cellular tower.

It is contemplated that features, advantages, and significances of example embodiments described herein are merely a portion of the present disclosure, and are not intended to be exhaustive or to limit the scope of the present disclosure. Further descriptions of the features, components, configuration, operations, and implementations of the example embodiments of the present disclosure are provided in the following.

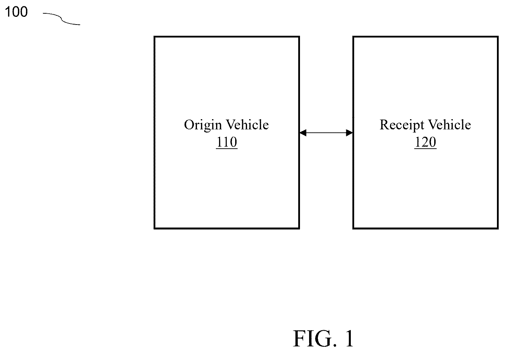

FIG. 1 illustrates a block diagram of an example system configuration 100 for performing dynamic communication of road hazard, according to one or more example embodiments. As illustrated in FIG. 1, system configuration 100 may include at least two vehicles, an origin vehicle 110 and a receipt vehicle 120, although it is understood that the present disclosure is not limited thereto and can include more vehicles and/or other components.

The origin vehicle 110 and the receipt vehicle 120 may include any suitable type of vehicle. For example, the origin vehicle 110 and the receipt vehicle 120 may include a motorized vehicle such as a car, a truck, a bus, a motorcycle, or any other suitable type of automobile powered by an engine, motor, or other mechanical means. Alternatively or additionally, the origin vehicle 110 and the receipt vehicle 120 may refer to a bicycle, a skateboard, and any other suitable types of non-motorized vehicle, without departing from the scope of the present disclosure.

Further, each of the origin vehicle 110 and the receipt vehicle 120 may include a communication system and a display system.

According to example embodiments, the communication system may be configured to transmit and receive signals of various ranges, such as cellular signals (long range), short wave radio (long range), WIFI 5GHz signals (medium range), Bluetooth signals (short range), and the like. Further, the communication system may be configured to communicate with other communication systems as vehicle to vehicle communication (V2V), where, for example, a communication system installed in the origin vehicle 110 may communicate with other communication systems installed in other vehicles (e.g., receipt vehicle 120).

The communication system may also be configured to communicate with a cellular tower. In addition, the communication system may be configured to perform additional operations associated with the transmitted and received signals/information, such as verification and the like.

According to example embodiments, the communication system may include a digital communication module (DCM) installed in the origin vehicle 110 and the receipt vehicle 120.

According to example embodiments, the display system may be configured to display various information to a driver of a vehicle, such as map information and the like. Further, the display system may be communicatively coupled to the communication system in order to receive information from the communication system and then display said information accordingly. In addition, the display system may be configured to perform additional operations associated with the displayed information, such as determination on which information to display and the like.

In this regard, according to example embodiments, the display system may include/host one or more software, applications, and the like that receive information from the communication system and perform corresponding operation based on the received information. For example, the display system may include/host a map application, where the map application may receive information from the communication system and then display said information on the map accordingly.

According to example embodiments, the display system may include an in-vehicle-an infotainment (IVI) system (e.g., IVI electronic control unit (ECU)) installed in the origin vehicle 110 and the receipt vehicle 120.

In this regard, according to example embodiments, the origin vehicle 110 may travel along a particular road and encounter (detect) a particular road hazard. Subsequently, the origin vehicle 110 may be configured to perform one or more operations for originating a road hazard broadcast as part of the dynamic communication of road hazard. In particular, the origin vehicle 110 may broadcast messages and provide information related to the encountered road hazard to other vehicles (e.g., receipt vehicle 120), via the communication system.

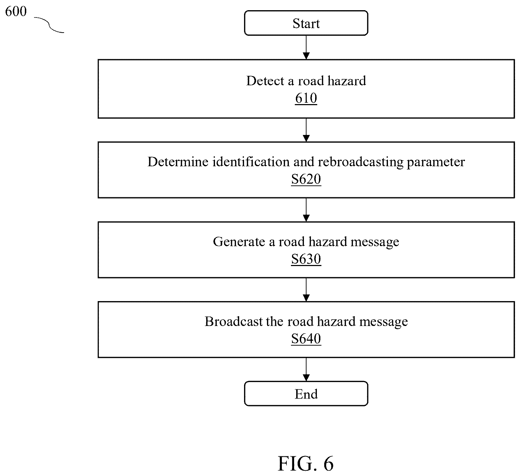

Example operations performable by the origin vehicle 110 for originating a road hazard broadcast as part of the dynamic communication of road hazard are described below with reference to FIG. 6.

In this regard, according to example embodiments, the receipt vehicle 120 may receive the broadcasted messages from the origin vehicle 110 including information related to the encountered road hazard. Subsequently, the receipt vehicle 120 may be configured to perform one or more operations for receiving a road hazard broadcast as part of the dynamic communication of road hazard. In particular, the receipt vehicle 120 may receive the broadcasted messages from the origin vehicle 110 via the communication system, process the broadcasted messages, and display information related to the road hazard (encountered by the origin vehicle 110 and received by the receipt vehicle 120) based on the broadcasted messages. The receipt vehicle 120 may also rebroadcast the message to other vehicles (e.g., third vehicle) in order to extend the range of the message to a wider area.

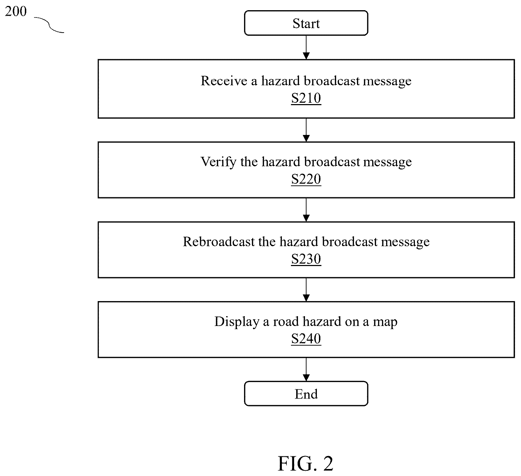

Example operations performable by the receipt vehicle 120 for receiving a road hazard broadcast as part of the dynamic communication of road hazard are described below with reference to FIG. 2 to FIG. 5.

It is understood that the origin vehicle 110 and the receipt vehicle 120 may also perform one or more operations for receiving a road hazard broadcast as part of the dynamic communication of road hazard and one or more operations for originating a road hazard broadcast as part of the dynamic communication of road hazard, respectively.

For example, the origin vehicle 110 may first encounter (detect) a particular road hazard (first road hazard), and perform one or more operations for originating a road hazard broadcast as part of the dynamic communication of road hazard. Then at a later time, the origin vehicle 110 may receive a broadcasted message including information regarding another road hazard (second road hazard) that was encountered by another vehicle, and then perform one or more operations for receiving a road hazard broadcast as part of the dynamic communication of road hazard.

Similarly, for example, the receipt vehicle 120 may first receive a broadcasted message including information related to the encountered road hazard (first road hazard), and perform one or more operations for receiving a road hazard broadcast as part of the dynamic communication of road hazard. Then at a later time, the receipt vehicle 120 may encounter (detect) another road hazard (second road hazard), and then perform one or more operations for originating a road hazard broadcast as part of the dynamic communication of road hazard.

FIG. 2 illustrates a flow diagram of an example method 200 for receiving a road hazard broadcast as part of dynamic communication of road hazard, according to one or more example embodiments. One or more operations in method 200 may be performed by at least one processor (e.g., processor 712) of the receipt vehicle.

As illustrated in FIG. 2, at operation S210, the at least one processor may be configured to receive a hazard broadcast message. The hazard broadcast message may include an identification associated with a road hazard and a rebroadcasting parameter. Here, the road hazard may include any kind of event, occurrence, and the like that negatively impact a condition of a road.

According to example embodiments, the identification associated with the road hazard may include at least one of: an identification of a type of the road hazard, an identification of a classification within a type of the road hazard, a location of the road hazard, and an identification of an origin of the hazard broadcast message (an entity which encounters/detects the road hazard and that first broadcast the hazard broadcast message; i.e., origin vehicle).

Here, the type of the road hazard may include, for example, high risk road hazard, low risk road hazard (e.g., road safety application), and the like. Further, the classification within the type of the road hazard may include, for example, potholes, fallen trees, sand in the road, and the like for high risk road hazard; and emergency vehicle approaching, platooning approaching, construction/roadwork, risky road structure (e.g., road structures that are likely to cause forward collision, lane change/blindspot collision, etc, and road structures that require movement assistance, and the like), and other low risk conditions such as emergency electric brake light for low risk road hazard. The type and classification of the road hazard may be predefined in accordance with one or more standards and/or regulatory rules.

According to example embodiments, the rebroadcasting parameter may include a parameter specifying an amount of time which the associated hazard broadcast message should be rebroadcasted. For example, the rebroadcasting parameter may include a discrete whole numerical number (e.g., 1, 2, 3, etc.) indicating an amount of time the hazard broadcast message should be rebroadcasted, although it is understood that the present disclosure is not limited thereto and the rebroadcasting parameter may be in any format without limitation. The rebroadcasting parameter may also include additional information associated with rebroadcasting of the hazard broadcast message, such as rebroadcast protocol and the like.

Here, it is understood that the hazard broadcast message may be short and small in size, including only the identification associated with the road hazard and the rebroadcasting parameter which may be matched with the information stored in the database (see descriptions below in relation to operation S420), such that the resource requirement to transmit and receive the hazard broadcast message by different vehicles may be minimized and the hazard broadcast message may be transmitted quickly and efficiently.

Further, the use of the rebroadcasting parameter may enable control of range which the hazard broadcast message may be transmitted from the origin vehicle that originates the hazard broadcast message.

For example, in a scenario involving a pothole in the road and the hazard broadcast message includes a rebroadcast value of one. As long as traffic is flowing in the area for a period of time, the pothole message will continuously be rebroadcast from vehicles encountering the hazard to vehicles that are incoming. No incoming vehicle will transmit the message again until they encounter the actual hazard.

According to example embodiments, the hazard broadcast message may be received from a vehicle (e.g., origin vehicle). Further, the hazard broadcast message may be received via a communication system, such as a digital communication module (DCM) installed in a vehicle (i.e., receipt vehicle).

Further, according to example embodiments, the hazard broadcast message may be cryptographically encrypted for security, and may include an embedded encryption key that is associated with the origin of the hazard broadcast message.

It is understood that the hazard broadcast message may be in any format, such as, for example, "h-001-35.689487-139.691711-4Y1SL65848Z411439-2-default", "h-002-35.689487-139.691711-4Y1SL65848Z411439-2-default", and "s-001-35.689487-139.691711-4Y1SL658487411439-5-bluetooth".

In addition, according to example embodiments, the at least one processer may operate via message queuing transport protocol (MQTT) to receive the hazard broadcast message, where a driver may select and decide what kind of message to receive (e.g., what kind of message other than hazard broadcast message to receive/subscribe to). The method then proceeds to operation S220.

At operation S220, the at least one processor may be configured to verify the hazard broadcast message.

According to example embodiments, the hazard broadcast message may be verified based on the encryption key embedded in the hazard broadcast message.

According to example embodiments, the hazard broadcast message may be verified based on anomaly detection application, which detects anomalies in the hazard broadcast message indicating that the origin of said hazard broadcast message is not trustworthy and/or said hazard broadcast message is a spam.

According to example embodiments, the hazard broadcast message may be verified based on a blocked message database. In particular, for example, according to example embodiments, in response to a failed verification of a hazard broadcast message (e.g., based on encryption key, anomaly detection application, etc.), the at least one processor may add the origin of said hazard broadcast message to a blocked message database, where verification of any subsequent hazard broadcast messages with the same origin (e.g., determined based on the identification of an origin of the hazard broadcast message) may automatically be failed.

The hazard broadcast message may be verified using any appropriate technique and/or tools, such as Global Platform ARM TrustZone APIs and the like.

According to example embodiments, the hazard broadcast message may be verified by a communication system, such as a digital communication module (DCM) installed in a vehicle (i.e., receipt vehicle), and/or a display system, such as in-vehicle-an infotainment (IVI) system installed in a vehicle (i.e., receipt vehicle).

In particular, for example, the DCM may be configured to verify the hazard broadcast message based on the encryption key embedded in the hazard broadcast message. In response to a successful verification based on the encryption key, the hazard broadcast message may be forwarded to the IVI where the IVI may be configured to verify the hazard broadcast message based on the anomaly detection application and/or the blocked message database.

Here, according to example embodiments, the hazard broadcast message may be logged based on a rotating log (e.g., 24h rotating log), and may be verified out of bands.

It is noted that, if the verification of a hazard broadcast message fails, said hazard broadcast message may be ignored and no other operations may be performed for said hazard broadcast message. Here, in response to a successful verification of the hazard broadcast message, the method then proceeds to operation S230.

At operation S230, the at least one processor may be configured to rebroadcast the hazard broadcast message based on the rebroadcasting parameter.

According to example embodiments, the hazard broadcast message may be rebroadcasted to other vehicles (e.g., other receipt vehicles). Further, the hazard broadcast message may be rebroadcasted via a communication system, such as a digital communication module (DCM) installed in a vehicle (i.e., receipt vehicle).

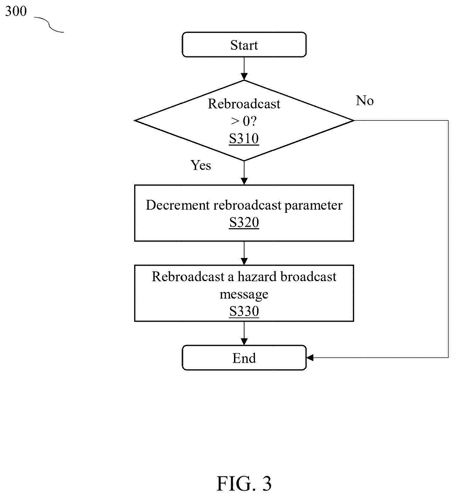

Examples of operations for rebroadcasting the hazard broadcast message are described below with reference to FIG. 3. The method then proceeds to operation S240.

At operation S240, the at least one processor may be configured to display the road hazard on a map based on the identification associated with the road hazard.

According to example embodiments, the road hazard may be displayed on the map via a display system, such as in-vehicle-an infotainment (IVI) system installed in a vehicle (i.e., receipt vehicle). In particular, for example, the DCM may forward the hazard broadcast message to the IVI after a successful verification along with relevant information, such as a timestamp of when the hazard broadcast message was received.

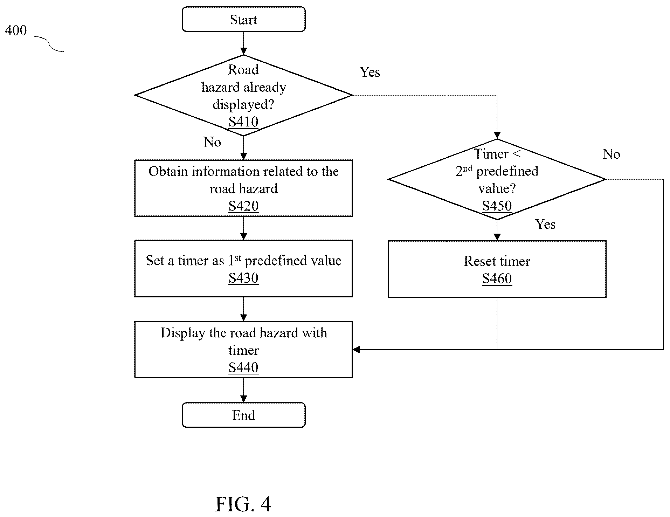

Examples of operations for displaying the road hazard on the map are described below with reference to FIG. 4 to FIG. 5.

Upon performing operation S240, the method 200 may be ended or be terminated. Alternatively, method 200 may return to operation S210, such that the at least one processor may be configured to repeatedly perform, for at least a predetermined amount of time, the receiving the hazard broadcast message (at operation S210), the verifying the hazard broadcast message (at operation S220), the rebroadcasting the hazard broadcast message (at operation S230), and the displaying the road hazard (at operation S240).

For instance, the at least one processor may continuously (or periodically) receive additional hazard broadcast message indicating different road hazards from different origins, and then restart the receiving the hazard broadcast message (at operation S210), the verifying the hazard broadcast message (at operation S220), the rebroadcasting the hazard broadcast message (at operation S230), and the displaying the road hazard (at operation S240).

Further, according to example embodiments, the method 200 may also continue to operation 610 in method 600 described below in relation to FIG. 6.

Accordingly, the above processes enable reporting of information related to road hazards between vehicles independently without relying on cellular connections to a cellular tower, thereby ensuring that such communication is possible at all-time even during a disaster as long as the message persists (i.e., via the rebroadcasting parameter).

In addition, example embodiments of the present disclosure may also provide dynamic protocol selection to control the range of the hazard broadcast message. In particular, for example, a fast moving ambulance may use bluetooth or wireless to transmit their messages to other vehicles, with a high rebroadcast value. This provides short to medium range communications about the geolocation of the ambulance while it moves. A vehicle encountering a tree blocking the road may use cellular to broadcast the hazard as far as possible so that road users will have time to consider alternative routes.

FIG. 3 illustrates a flow diagram of an example method 300 for rebroadcasting a hazard broadcast message, according to one or more example embodiments. One or more operations of method 300 may be part of operation S230 in method 200, and may be performed by at least one processor (e.g., processor 712) of the receipt vehicle.

As illustrated in FIG. 3, at operation S310, the at least one processor may be configured to determine whether the rebroadcasting parameter (included in the hazard broadcast message received during operation S210) is greater than zero.

In this regard, in response to determining that the rebroadcasting parameter is not greater than zero (equal to or less than zero), the at least one processor may determine that the hazard broadcast message (i.e., hazard broadcast message received during operation S210) should not be rebroadcasted any more, and the method proceeds to end.

On the other hand, in response to determining that the rebroadcasting parameter is greater than zero, the at least one processor may determine that the hazard broadcast message (i.e., hazard broadcast message received during operation S210) should be rebroadcasted, and the method proceeds to operation S320.

At operation S320, the at least one processor may be configured to decrement the rebroadcasting parameter by one.

For example, if the rebroadcasting parameter included in the hazard broadcast message received during operation S210 is 3, the at least one processor may decrement said rebroadcasting parameter to 2 during operation S320. The method then proceeds to operation S330.

At operation S330, the at least one processor may be configured to rebroadcast the hazard broadcast message (i.e., hazard broadcast message received during operation S210) with decremented rebroadcasting parameter.

In particular, the at least one processor may rebroadcast the hazard broadcast message including the same identification associated with the road hazard, but with the rebroadcasting parameter corresponding to the decremented rebroadcasting parameter instead of the rebroadcasting parameter initially included in the hazard broadcast message when received during operation S210.

For example, the at least one processor may rebroadcast the hazard broadcast message including the same identification associated with the road hazard, but with the rebroadcasting parameter corresponding 2 as decremented ruing operation S320.

According to example embodiments, the hazard broadcast message may be resigned with a cryptographic encryption key prior to the rebroadcasting, to ensure that the hazard broadcast message may remain tamper proof.

FIG. 4 illustrates a flow diagram of an example method 400 for displaying a road hazard on a map, according to one or more example embodiments. One or more operations of method 400 may be part of operation S240 in method 200, and may be performed by at least one processor (e.g., processor 712) of the receipt vehicle. Further, one or more operations of method 400 may be combined with one or more operations of method 500 below without limitation.

As illustrated in FIG. 4, at operation S410, the at least one processor may be configured to determine whether the road hazard is already displayed on the map.

In particular, for example, the at least one processor may check and determine whether the road hazard indicated in the hazard broadcast message (i.e., a particular road hazard at a particular location indicated in the hazard broadcast message received during operation S210) has already been reported to the receipt vehicle and has already been displayed on the map of the display system of the receipt vehicle.

In this regard, in response to determining that the road hazard is not already displayed on the map, the method then proceeds to operation S420. On the other hand, in response to determining that the road hazard is already displayed on the map, the method then proceeds to operation S450.

At operation S420, the at least one processor may be configured to obtain information related to the road hazard from a database based on the identification associated the road hazard (indicated in the hazard broadcast message received during operation S210).

In particular, according to example embodiments, the receipt vehicle may store a predefined database. Said database may include information associated with various types and classifications of road hazards.

According to example embodiments, the information related to the road hazard stored in the database may include at least one of: a type of the road hazard, a classification within a type of the road hazard, a labelling of the road hazard, a message associated with the road hazard, default rebroadcasting parameter value associated with the road hazard, an origin of the road hazard, a handler application associated with the road hazard, and an indication of subscription associated with the road hazard.

Further, according to example embodiments, the information related to the road hazard stored in the database may have a structure according to the following, although it is understood that the present disclosure is not limited thereto and the information related to the road hazard may be in any structure without limitation: "[type] [classification] [labelling] [message] [default rebroadcast] [origin] [handler application] [subscription]".

For example, the information related to the road hazard may include the following "hazard, 001, pothole, pothole in road ahead, 1, standard, maps, y", "hazard, 002, ice, icy conditions head, 2, standard, maps, y", "hazard, 003, oil, oil spill on road, 1, standard, traction control, n", and "safety, 001, emergency vehicle, emergency vehicle approaching, 0, USA, emergency services, y".

In this regard, according to example embodiments, based on the identification associated with the road hazard indicated in the hazard broadcast message (e.g., an identification of a type of the road hazard, an identification of a classification within a type of the road hazard, etc.) the at least one processor may identify and obtain information related to the corresponding road hazard from the database. For example, based on the identification of the type of the road hazard indicated in the hazard broadcast message corresponding to "hazard", the identification of the classification within the type of the road hazard indicated in the hazard broadcast message corresponding to "001", and the database storing information "hazard, 001, pothole, pothole in road ahead, 1, standard, maps, y", the at least one processor may identify that the road hazard indicated in the hazard broadcast message corresponds to the "pothole". The method then proceeds to operation S430.

At operation S430, the at least one processor may be configured to set a timer associated with the road hazard as a first predefined value. The timer may specify an amount of time the road hazard may be displayed on the map.

According to example embodiments, the first predefined value may be universally predefined for all road hazards. According to example embodiments, the first predefined value may be predefined based on the information related to the road hazard. For example, a particular classification of a particular type of road hazard may have a specific first predefined value as predefined in the database. The method then proceeds to operation S440.

At operation S440, the at least one processor may be configured to display the road hazard on the map based on the information related to the road hazard and the timer.

For example, the at least one processor may display the road hazard at a particular location on the map (e.g., based on the location of the road hazard indicated in the hazard broadcast message) along with information such as the classification, type, message, and the like associated with the road hazard obtained during operation S420, where such road hazard may be displayed for an amount of time corresponding to the timer set during operation S430.

Here, the at least one processor may display the road hazard on the map by transmitting the information related to the road hazard along with the hazard broadcast message to a map application included/hosted by the display system of the receipt vehicle, where the map application may then display the road hazard on the map based on the received information.

In this regard, according to example embodiments, the at least one processor may be configured to transmit the information related to the road hazard along with the hazard broadcast message to one or more applications included/hosted by the display system of the receipt vehicle, based on the information related to the road hazard. In particular, as described above, the information related to the road hazard stored in the database may include a handler application associated with the road hazard, which defines an application that should receive and process information related to the road hazard in order to provide additional contexts.

For example, based on the database storing information "hazard, 001, pothole, pothole in road ahead, 1, standard, maps, y" for the pothole hazard, the at least one processor may transmit the information related to the road hazard (pothole) along with the hazard broadcast message to the map application. In another example, based on the database storing information "hazard, 003, oil, oil spill on road, 1, standard, traction control, n" for the oil spill hazard, the at least one processor may transmit the information related to the road hazard (oil spill) along with the hazard broadcast message to the traction control application.

According to example embodiments, when there is a plurality of applications included/hosted by the display system of the receipt vehicle, one application from among the plurality of applications may be designated as a default application which may receive information related to the road hazard along with the hazard broadcast message when such road hazard does not have a designated application defined in the database. For example, the map application may be designated as the default application.

At operation S450, the at least one processor may be configured to determine whether a timer associated with the road hazard is less than a second predefined value.

In particular, when the road hazard indicated in the hazard broadcast message has already been reported to the receipt vehicle and has already been displayed on the map of the display system of the receipt vehicle in the similar manner as described above in relation to operations S420 to S440, such road hazard would be displaying on the map with the timer as described above in relation to operation S440. As such, at operation S450, the at least one processor may determine whether, at the current time, the timer is less than a second predefined value.

For example, a particular road hazard may have been reported to the receipt vehicle and is displayed on the map with a timer of 1h (i.e., the first predefined value is 1h) as described above in relation to operation S420 to S440. Then, 20 minutes later, the same road hazard may be reported to the receipt vehicle again (e.g., via a different vehicle), and the timer is now 40 minutes. Here, if the second predefined value is 50 minutes, then during operation S450, the at least one processor may determine whether the timer (40 minutes) is less than the second predefined value (50 minutes). In this example, the at least one processor may determine that the timer is less than the second predefined value.

According to example embodiments, the second predefined value may be universally predefined for all road hazards. According to example embodiments, the second predefined value may be predefined based on the information related to the road hazard. For example, a particular classification of a particular type of road hazard may have a specific second predefined value. Further, the first predefined value and the second predefined value may be the same or different.

In this regard, in response to determining that the timer associated with the road hazard is not less than the second predefined value (equal to or greater than), the method then proceeds to operation S440 where the timer is kept as is and the road hazard is continued to be displayed according to the timer without any changes.

On the other hand, in response to determining that the timer associated with the road hazard is less than the second predefined value, the method then proceeds to operation S460.

At operation S460, the at least one processor may be configured to reset the timer associated with the road hazard to the second predefined value.

For example, in response to determining that the timer (40 minutes) is less than the second predefined value (50 minutes), the at least one processor may reset the timer back to 50 minutes. The method then proceeds to operation S440 where the timer is reset to the second predefined value and the road hazard is continued to be displayed according to the reset timer (e.g., for another 50 minutes instead of 40 minutes).

In view of the above, relevant information associated with the broadcasted road hazard may be displayed and viewed by the driver of the receipt vehicle, thereby providing crucial information to the driver and enabling the driver to prepare and respond to the road hazard ahead of time.

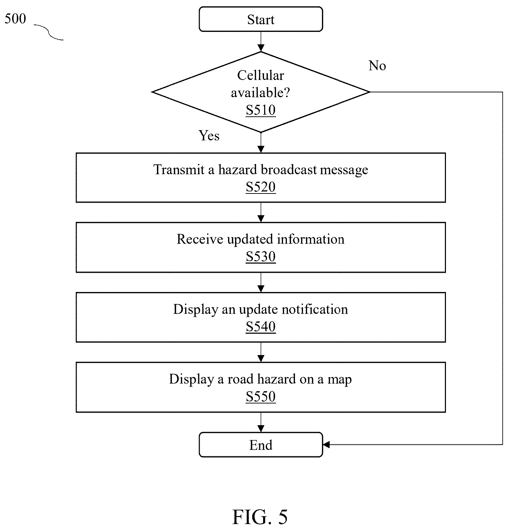

FIG. 5 illustrates a flow diagram of an example method 500 for displaying a road hazard on a map, according to one or more example embodiments. One or more operations of method 500 may be part of operation S240 in method 200, and may be performed by at least one processor (e.g., processor 712) of the receipt vehicle. Further, one or more operations of method 500 may be combined with one or more operations of method 400 above without limitation.

As illustrated in FIG. 4, at operation S410, the at least one processor may be configured to determine whether a cellular communication to a server is available.

In this regard, in response to determining that the cellular communication to the server is not available, the method proceeds to end. On the other hand, in response to determining that the cellular communication to the server is available, the method proceeds to operation S520.

At operation S520, the at least one processor may be configured to transmit the hazard broadcast message to the server via the cellular communication. The method then proceeds to operation S530.

At operation S530, the at least one processor may be configured to receive updated information related to the road hazard from the server via the cellular communication.

The updated information may include any kind of information related to the road hazard. For example, the updated information may include a new value for the first predefined value. The method then proceeds to operation S540.

At operation S540, the at least one processor may be configured to display an update notification to a user. The user may include a driver of the receipt vehicle. Further, the update notification may include an indication that the updated information related to the road hazard has been received. The method then proceeds to operation S550.

At operation S550, the at least one processor may be configured to display the road hazard on the map based on the updated information related to the road hazard.

For example, the updated information may include a new value for the first predefined value (e.g., 2h). Accordingly, the timer associated with the road hazard may be updated to the new value, and the road hazard may then be displayed for 2h instead of 1h (based on the updated information related to the road hazard).

In view of the above, updated information associated with the broadcasted road hazard may be obtained, where the most recent and relevant information may be provided to the driver of the receipt vehicle.

FIG. 6 illustrates a flow diagram of an example method 600 for originating a road hazard broadcast as part of the dynamic communication of road hazard, according to one or more example embodiments. One or more operations in method 600 may be performed by at least one processor (e.g., processor 712) of the origin vehicle.

As illustrated in FIG. 6, at operation S610, the at least one processor may be configured to detect a road hazard.

The road hazard may be detected using any appropriate methods, techniques, and tools. For example, the road hazard may be detected using one or more sensors of the origin vehicle, such as a camera, a LIDAR sensor, and the like. In another example, the road hazard may be detected by receiving an input from a user (driver) indicating that a road hazard is detected. The method then proceeds to operation S620.

At operation S620, the at least one processor may be configured to determine an identification associated with the road hazard and a rebroadcasting parameter.

According to example embodiments, the identification associated with the road hazard may include at least one of: an identification of a type of the road hazard, an identification of a classification within a type of the road hazard, a location of the road hazard, and an identification of an origin of the hazard broadcast message (an entity which encounters/detects the road hazard and that first broadcast the hazard broadcast message; i.e., origin vehicle), in the similar manner as described above in relation to operation S210.

According to example embodiments, the identification associated with the road hazard and the rebroadcasting parameter may be determined based on information related to the road hazard stored in a database. The database may be similar to the database of the receipt vehicle as described above in relation to operation S420, where the database may include at least one of: a type of the road hazard, a classification within a type of the road hazard, a labelling of the road hazard, a message associated with the road hazard, default rebroadcasting parameter value associated with the road hazard, an origin of the road hazard, a handler application associated with the road hazard, and an indication of subscription associated with the road hazard. As such, the identification associated with the road hazard and the rebroadcasting parameter may be determined based on such information.

For example, in response to detecting a pothole (road hazard) during operation S610 and based on the database storing information "hazard, 001, pothole, pothole in road ahead, 1, standard, maps, y", the at least one processor may determine the identification of the type of the road hazard as "hazard", the identification of the classification within the type of the road hazard as "001", and the rebroadcasting parameter as 1.

According to example embodiments, the rebroadcasting parameter may be determined dynamically using an artificial intelligence (AI)/ machine learning (ML) method. The method then proceeds to operation S630.

At operation S630, the at least one processor may be configured to generate a road hazard message comprising the identification associated with the road hazard and the rebroadcasting parameter.

According to example embodiments, the at least one processor may also cryptographically encrypt the road hazard message with an embedded cryptographic key. The method then proceeds to operation S640.

At operation S640, the at least one processor may be configured to broadcast the road hazard message.

It is noted that, according to example embodiments, one or more operations in method 600 may be performed by the receipt vehicle (e.g., after performing one or more operations in method 200). In this regard, the road hazard described above in relation to method 600 may be a second road hazard, which may be the same particular road hazard as the road hazard in the road hazard message received during operation S210, or may be a different road hazard.

Here, an example scenario is provided.

An ambulance may be driving down the highway at high speed and may need vehicles to move to the side of the road. The ambulance (origin vehicle) may broadcast a hazard broadcast message via wireless using the communication system (as it only needs immediate close range vehicles to move out of the road) with a rebroadcasting parameter of 3. In this regard, hazard broadcast message may be received by a plurality of vehicles (receipt vehicles), where each vehicle may decrement the rebroadcasting parameter and then rebroadcast the hazard broadcast message, granting the hazard broadcast message three additional hops prior to expiration.

This means that vehicles at a significant distance ahead of ambulance will get a message to move out of the road but not further. Vehicles behind the ambulance will note that they have already received a copy of it and so no action will be taken aside from updating the map/timer.

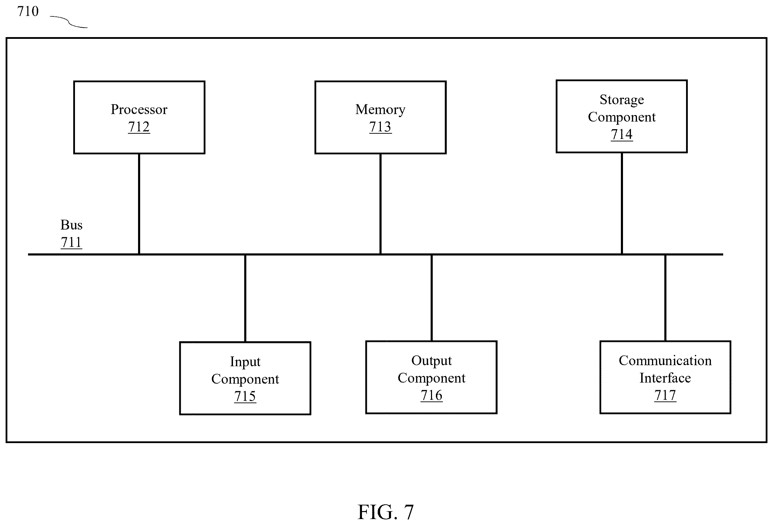

FIG. 7 illustrates a block diagram of example components in a system 710, according to one or more example embodiments. The system 710 may correspond to the origin vehicle 110 or the receipt vehicle 120 in FIG. 1, thus the features associated with the origin vehicle 110/receipt vehicle 120 and the system 710 may be similarly applicable to each other, unless being explicitly described otherwise.

As illustrated in FIG. 7, the system 710 may include at least one bus 711, at least one processor 712, at least one memory 713, at least one storage component 714, at least one input component 715, at least one output component 716, and at least one communication interface 717.

It is contemplated that the system 710 may include more or less components than illustrated in FIG. 7, without departing from the scope of the present disclosure. For instance, in some embodiments, the system 710 may include a plurality of storage components 714, the input component 715 and the output component 716 may be implemented as a transceiver component, the memory 713 and storage component 714 may be implemented as a memory storage, and the like.

The bus 711 may be configured to facilitate or enable communications among the components of the system 710. Specifically, the bus 711 may communicatively couple the components to each other and provide a means for data transfer and flow of control signals between the components. The bus 711 may include one or more of: an internal bus, an address bus, a data bus, a control bus, a controller area network (CAN) bus, an Ethernet bus, a peripheral component interconnect express (PCIe) bus, and any other suitable type of bus that can be implemented in the system 710 to enable communication and coordination between the components within the system 710 in real-time (or near real-time).

The processor 712 may be implemented in hardware, firmware, or a combination of hardware and software, and may be configured to handle real-time (or near real-time) data processing and control of the control system 710. The processor 712 may include one or more of: a central processing unit (CPU), a graphics processing unit (GPU), a neural processing unit (NPU), a tensor processing unit (TPU), an accelerated processing unit (APU), a microprocessor, a microcontroller, a digital signal processor (DSP), a field-programmable gate array (FPGA), an application-specific integrated circuit (ASIC), and/or another type of processing or computing component that can be implemented in the system 710. In some implementations, the processor 712 may be capable of being programmed to perform one or more operations described herein. Further, the processor 712 may include a plurality of processing units, each of which is dedicated to performing a specific operation.

The memory 713 may include one or more mediums for storing temporary data, runtime variables, program instructions, and buffers required for the operations of the control system 710. The memory 713 may include one or more of: a flash memory, a read-only memory (ROM), a random-access memory (RAM), a dynamic or static storage device (e.g., a flash memory, a magnetic memory, and/or an optical memory), any other suitable type of memory that can be implemented in the system 710 to store information and/or instructions for use by the processor 712.

The storage component 714 may be configured to store non-volatile data, such as firmware, configuration settings, calibration data, information, and/or software related to the operation and use of the system 710. For example, the storage component 714 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

According to example embodiments, the storage component 714 may be configured to store computer-readable or computer-executable instructions for implementing one or more operations of the system 710. The storage component 714 may provide the stored information to the memory 713 for the execution of the processor 712.

The input component 715 may include one or more input components that permit the system 710 to receive information, such as via user input (e.g., a touch screen display, a keyboard, a keypad, a mouse, a button, a switch, and/or a microphone). The output component 716 may include one or more output components that provide output information from the system 710 (e.g., a display, a speaker, a navigation device, one or more light-emitting diodes (LEDs), etc.) According to example embodiments, the input component 715 and/or the output component 716 may be optional and may be excluded from the system 710.

The at least one communication interface 717 may include a transceiver-like component (e.g., a transceiver and/or a separate receiver and transmitter) that enables the system 710 to communicate with other components (e.g., ECUs, user devices, etc.), such as via a wired connection, a wireless connection, or a combination of wired and wireless connections. For example, communication interface 717 may include a controller area network (CAN) bus interface, an Ethernet interface, an optical interface, a coaxial interface, an infrared interface, a radio frequency (RF) interface, a universal serial bus (USB) interface, a Wi-Fi interface, a cellular network interface, or the like.

According to one or more embodiments, the communication interface 717 may include at least one input/output (I/O) interface, at least one network interface, at least one storage interface, or the like, that enable the components 712-716 to communicate with other components. Further, the communication interface 717 may include one or more application programming interfaces (APIs) that allow the system 710 (or one or more components included therein) to communicate with one or more software applications (e.g., software application deployed in the ECUs, etc.)

Computer-executable instructions (e.g., software instructions, etc.) may be read into memory 713 and/or storage component 714 from another computer-readable medium or from another device (e.g., a remote server, an external storage, etc.) via, for example, the communication interface 717. When executed, the computer-executable instructions stored in memory 713 and/or storage component 714 may cause the processor 712 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

It is contemplated that features, advantages, and significances of example embodiments described hereinabove are merely a portion of the present disclosure, and are not intended to be exhaustive or to limit the scope of the present disclosure. Further descriptions of the features, components, configuration, operations, and implementations of example embodiments of the present disclosure, as well as the associated technical advantages and significances, are provided in the following.

It is understood that the specific order or hierarchy of blocks in the processes/ flowcharts disclosed herein is an illustration of example approaches. Based upon design preferences, it is understood that the specific order or hierarchy of blocks in the processes/ flowcharts may be rearranged. Further, some blocks may be combined or omitted. The accompanying method claims present elements of the various blocks in a sample order, and are not meant to be limited to the specific order or hierarchy presented.

Some embodiments may relate to a system, a method, and/or a computer-readable medium at any possible technical detail level of integration. Further, as described hereinabove, one or more of the above components described above may be implemented as instructions stored on a computer readable medium and executable by at least one processor (and/or may include at least one processor ). The computer-readable medium may include a computer-readable non-transitory storage medium (or media) having computer-readable program instructions thereon for causing a processor (or processors) to carry out operations.

The computer readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program code/instructions for carrying out operations may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object-oriented programming languages such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects or operations.

These computer readable program instructions may be provided to a processor of a SoC, a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or another device to cause a series of operational steps to be performed on the computer, other programmable apparatus or other device to produce a computer-implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer-readable media according to various embodiments. In this regard, each block in the flowchart or block diagrams may represent a module, segment, or portion of instructions, which comprises one or more executable instructions for implementing the specified logical function(s). The method, computer system, and computer-readable medium may include additional blocks, fewer blocks, different blocks, or differently arranged blocks than those depicted in the Figures. In some alternative implementations, the functions noted in the blocks may occur out of the order noted in the Figures. For example, two blocks shown in succession may, in fact, be executed concurrently or substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware may be designed to implement the systems and/or methods based on the description herein.

## Claims

1. An system comprising:
a memory storage storing computer-executable instructions; and
at least one processor communicatively coupled to the memory storage, wherein the at least one processor is configured to execute the instructions to:
receive a hazard broadcast message comprising an identification associated with a road hazard and a rebroadcasting parameter;
verify the hazard broadcast message;
in response to a successful verification of the hazard broadcast message, rebroadcast the hazard broadcast message based on the rebroadcasting parameter; and
display the road hazard on a map based on the identification associated with the road hazard.

2. The system according to claim 1, wherein the system comprises a digital communication module (DCM) installed in a vehicle, and wherein the hazard broadcast message is received and rebroadcasted by the DCM.

3. The system according to claim 1 or 2, wherein the system is configured to rebroadcast the hazard broadcast message based on the rebroadcasting parameter by:
determining whether the rebroadcasting parameter is greater than zero; and
in response to determining that the rebroadcasting parameter is greater than zero, decrementing the rebroadcasting parameter by one and rebroadcasting the hazard broadcast message with decremented rebroadcasting parameter.

4. The system according to any one of claims 1 to 3, wherein the system is configured to display the road hazard on the map based on the identification associated with the road hazard by, in response to determining that the road hazard is not already displayed on the map:
obtaining information related to the road hazard from a database based on the identification associated with the road hazard;
setting a timer associated with the road hazard as a first predefined value; and
displaying the road hazard on the map based on the information related to the road hazard and the timer.

5. The system according to any one of claims 1 to 4, wherein the system is configured to display the road hazard on the map based on the identification associated with the road hazard by, in response to determining that the road hazard is already displayed on the map:
determining whether a timer associated with the road hazard is less than a second predefined value;
in response to determining that the timer associated with the road hazard is less than the second predefined value, resetting the timer associated with the road hazard to the second predefined value; and
displaying the road hazard on the map based on information related to the road hazard and the timer.

6. The system according to any one of claims 1 to 5, wherein the system is configured to display the road hazard on the map based on the identification associated with the road hazard by:
determining whether a cellular communication to a server is available;
in response to determining that the cellular communication to the server is available, transmitting the hazard broadcast message to the server via the cellular communication;
receiving updated information related to the road hazard from the server via the cellular communication;
displaying an update notification to a user indicating that the updated information related to the road hazard has been received; and
displaying the road hazard on the map based on the updated information related to the road hazard.

7. The system according to any one of claims 1 to 6, and wherein the system is further configured to:
detect a second road hazard;
determine an identification associated with the second road hazard and a rebroadcasting parameter;
generate a second road hazard message comprising the identification associated with the second road hazard and the rebroadcasting parameter; and
broadcast the second road hazard message.

8. A method comprising:
receiving a hazard broadcast message comprising an identification associated with a road hazard and a rebroadcasting parameter;
verifying the hazard broadcast message;
in response to a successful verification of the hazard broadcast message, rebroadcasting the hazard broadcast message based on the rebroadcasting parameter; and
displaying the road hazard on a map based on the identification associated with the road hazard.

9. The method according to claim 8, wherein the method is performed by a system comprising a digital communication module (DCM) installed in a vehicle, and wherein the hazard broadcast message is received and rebroadcasted by the DCM.

10. The method according to claim 8 or 9, wherein the rebroadcasting the hazard broadcast message based on the rebroadcasting parameter comprises:
determining whether the rebroadcasting parameter is greater than zero; and
in response to determining that the rebroadcasting parameter is greater than zero, decrementing the rebroadcasting parameter by one and rebroadcasting the hazard broadcast message with decremented rebroadcasting parameter.

11. The method according to any one of claims 8 to 10, wherein the displaying the road hazard on the map based on the identification associated with the road hazard comprises, in response to determining that the road hazard is not already displayed on the map:
obtaining information related to the road hazard from a database based on the identification associated with the road hazard;
setting a timer associated with the road hazard as a first predefined value; and
displaying the road hazard on the map based on the information related to the road hazard and the timer.

12. The method according to any one of claims 8 to 11, wherein the displaying the road hazard on the map based on the identification associated with the road hazard comprises, in response to determining that the road hazard is already displayed on the map:
determining whether a timer associated with the road hazard is less than a second predefined value;
in response to determining that the timer associated with the road hazard is less than the second predefined value, resetting the timer associated with the road hazard to the second predefined value; and
displaying the road hazard on the map based on information related to the road hazard and the timer.

13. The method according to any one of claims 8 to 12, wherein the displaying the road hazard on the map based on the identification associated with the road hazard comprises:
determining whether a cellular communication to a server is available;
in response to determining that the cellular communication to the server is available, transmitting the hazard broadcast message to the server via the cellular communication;
receiving updated information related to the road hazard from the server via the cellular communication;
displaying an update notification to a user indicating that the updated information related to the road hazard has been received; and
displaying the road hazard on the map based on the updated information related to the road hazard.

14. The method according to any one of claims 8 to 13, wherein the method further comprises:
detecting a second road hazard;
determining an identification associated with the second road hazard and a rebroadcasting parameter;
generating a second road hazard message comprising the identification associated with the second road hazard and the rebroadcasting parameter; and
broadcasting the second road hazard message.

15. A computer program causing at least one processor to perform a method comprising:
receiving a hazard broadcast message comprising an identification associated with a road hazard and a rebroadcasting parameter;
verifying the hazard broadcast message;
in response to a successful verification of the hazard broadcast message, rebroadcasting the hazard broadcast message based on the rebroadcasting parameter; and
displaying the road hazard on a map based on the identification associated with the road hazard.
